(19) Europäisches Patentamt
European Patent Office
Office européen des brevets

(11) Veröffentlichungsnummer: **0 405 269 A2**

(12) **EUROPÄISCHE PATENTANMELDUNG**

(21) Anmeldenummer: **90111394.4**

(51) Int. Cl.5: **C08L 81/02**

(22) Anmeldetag: **16.06.90**

(30) Priorität: **29.06.89 DE 3921259**

(43) Veröffentlichungstag der Anmeldung:
**02.01.91 Patentblatt 91/01**

(84) Benannte Vertragsstaaten:
**BE DE FR GB IT**

(71) Anmelder: **BAYER AG**
**D-5090 Leverkusen 1 Bayerwerk(DE)**

(72) Erfinder: **Heinz, Hans-Detlef, Dr.**
**Breslauer Strasse 31**
**D-4150 Krefeld(DE)**
Erfinder: **Rempel, Dieter, Dr.**
**Max-Beckmann-Strasse 35**
**D-5090 Leverkusen(DE)**
Erfinder: **Köhler, Burkhard, Dr.**
**Mündelheimer Strasse 94**
**D-4150 Krefeld(DE)**
Erfinder: **Schmitt, Walter, Dr.**
**Am Konebusch 5a**
**D-4040 Neuss 21(DE)**
Erfinder: **Pielartzik, Harald, Dr.**
**Doerperhofstrasse 39**
**D-4150 Krefeld(DE)**

(54) **Formmassen aus Arylensulfidpolymeren mit verbesserter Verarbeitbarkeit.**

(57) Die Erfindung betrifft Formamssen aus Arylensulfidpolymeren mit verbesserter Verarbeitbarkeit, hergestellt durch Zusammenschmelzen von Polyarylensulfiden, vorzugsweise Polyphenylensulfid und speziellen Amiden und/oder Harnstoffen.

EP 0 405 269 A2

# FORMMASSEN AUS ARYLENSULFIDPOLYMEREN MIT VERBESSERTER VERARBEITBARKEIT

Die Erfindung betrifft Formamssen aus Arylensulfidpolymeren mit verbesserter Verarbeitbarkeit, hergestellt durch Zusammenschmelzen von Polyarylensulfiden, vorzugsweise Polyphenylensulfid und speziellen Amiden und/oder Harnstoffen.

Arylensulfidpolymere werden als inerte, hochtemperaturbeständige Thermoplaste, die zudem einen hohen Füllgrad mit Glasfasern und/oder anderen Materialien erlauben, zunehmend für die Elektroindustrie und andere Industriebereiche interessant.

Der Einsatz dieser Polymeren, insbesondere des Polyparaphenylensulfids (PPS), nimmt vor allem in Bereichen, die bislang Duroplasten vorbehalten waren, wegen der einfacheren Verarbeitbarkeit zu.

Spritzgußfähige PPS-Formmassen, die für gewöhnlich Glasfasern und/oder mineralische Füllstoffe in hohen Konzen trationen enthalten, zeichnen sich allgemein durch niedrige Viskositäten der Schmelze aus. Infolgedessen macht ihre Verarbeitung durch Spritzgießen normalerweise keine Schwierigkeiten.

Bei der Herstellung dünnwandiger Formteile können jedoch Schwierigkeiten auftreten, wenn die Fließwege der Schmelzen im Werkzeug sehr lang sind. Dies ist vorallem dann der Fall, wenn aus Gründen der Verzugsfreiheit die Anschnitte so gelegt sind, daß eine Vorzugsorientierung der Glasfasern resultiert.

Bei der Herstellung derartiger Formteile kann es schwierig sein, die Formen trotz der niedrigen Viskosität der Schmelzen vollständig zu füllen. Der Grund dafür ist, daß PPS-Schmelzen beim Abkühlen außerordentlich rasch erstarren. Dies folgt aus der hohen Kristallisationstemperatur von PPS, d.h. der Temperatur, bei der beim Abkühlen der Schmelzen die Kristallisation einsetzt. Diese Kristallisationstemperatur liegt beim Polyparaphenylensulfid bei 230-250 °C.

Das hat zur Folge, daß bei langen Fließwegen der Schmelzen diese bereits während des Formfüllvorgangs soweit abgekühlt werden können, daß dann schon die Erstarrung unter Zunahme der Viskosität der Schmelzen einsetzt. Die Folge ist, daß die vollständige Füllung der Form erschwert wird. Allgemein weisen Formteile, bei deren Herstellung der Erstarrungsprozeß der Schmelze einsetzt, bevor die Form vollständig gefüllt ist, verringerte mechanische Festigkeit und, bei verstärkten oder gefüllten Formmassen, Oberflächenstörungen in Angußferne auf.

Im Sinne der Verarbeitbarkeit von gegebenenfalls faserverstärkten und/oder mineralgefüllten Polyarylensulfidmassen wäre es daher von Vorteil, die Kristallisationsgeschwindigkeit sowie gegebenenfalls die Schmelzviskosität deutlich zu senken. Vorteilhafterweise sollte der hohe Kristallisationsgrad der Polymeren dadurch nicht beeinflußt werden.

Die Möglichkeit, die Schmelzviskosität der Arylensulfidpolymeren durch Absenkung der Molekulargewichte zu erniedrigen, ist dadurch begrenzt, daß die mechanischen Festigkeiten von Polyarylensulfid-Formmassen bei zu niedrigen Molekulargewichten drastisch verringert sind. Außerdem neigen niedermolekulare Polyarylensulfide zu noch höherer Kristallisationsgeschwindigkeit.

Es wurde nun gefunden, daß Mischungen (Formmassen) aus Arylensulfidpolymeren und speziellen Amiden und/oder Harnstoffen eine deutlich verringerte Kristallisationsgeschwindigkeit besitzen, wobei zusätzlich die Schmelzviskosität verringert sowie gegebenenfalls die Entformbarkeit und die Oberfläche von Formteilen verbessert sein kann.

Gegenstand der Erfindung sind daher Arylensulfidpolymerformmassen, dadurch gekennzeichnet, daß sie zu

1) 70-99,95 Gew.-% aus Arylensulfidpolymeren, bevorzugt Polyparaphenylensulfid (PPS),

2) 0,05-30 Gew.-% aus Amiden und/oder Harnstoffen der Formeln (I)-(IV),

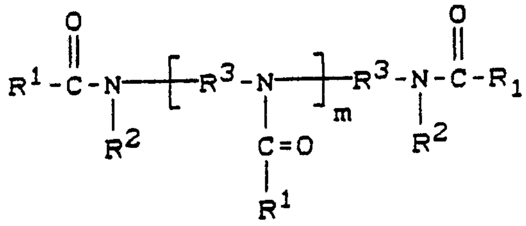 (I),

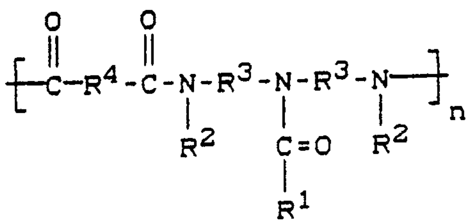 (II),

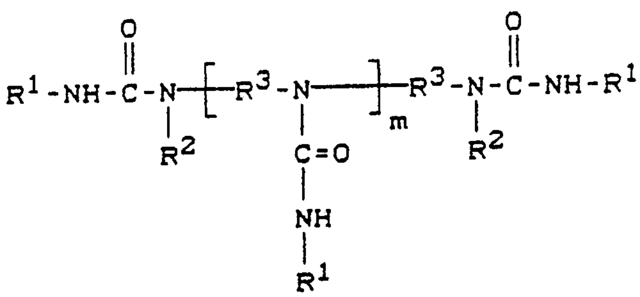 (III),

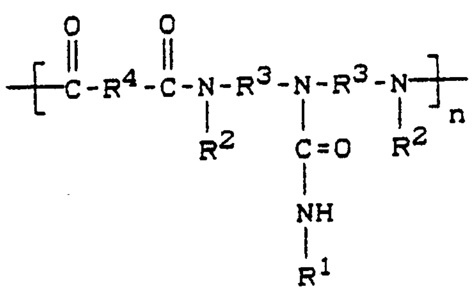 (IV),

wobei

$R^1$ unabhängig voneinander einen Kohlenstoffrest mit 1-40 C-Atomen, bevorzugt 1-23 C-Atomen, der linear und/oder verzweigt, gesättigt oder ungesättigt, offenkettig und/oder cyclisch aliphatisch und/oder (hetero)aromatisch mit Heteroatomen wie N, O, S, sein kann, bevorzugt ein $C_{1-22}$-Alkyl- bzw. $C_{6-14}$-Arylrest,

$R^2$ unabhängig voneinander Wasserstoff, $R_1$ oder Reste der Formeln (V) und (VI),

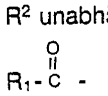 (V),

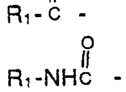 (VI),

bevorzugt Wasserstoff,

$R^3$, $R^4$ unabhängig voneinander einen bivalenten Kohlenstoffrest mit 2-20 Kohlenstoffatomen, der auch Heteroatome wie N, O, S enthalten kann und linear oder verzweigt, offenkettig oder cyclisch, aliphatisch oder aromatisch ist, bevorzugt aber einen Alkylenrest mit 2-6 C-Atomen,

m eine ganze Zahl von 3-50, bevorzugt 3-20,

n eine ganze Zahl derart gewählt, daß das mittlere Molekulargewicht ( $\overline{M}_n$) der den Verbindungen der Formeln (II) und (IV) zugrundeliegenden Polyamidamine mindestens 500, bevorzugt mindestens 1000, und nicht mehr als 50000 beträgt,

bedeuten, und wobei die Additive der Formeln (II) und (IV) Endgruppen wie $C_1$-$C_{10}$-Alkyl, $C_6$-$C_{24}$-Aryl, $C_7$-$C_{30}$-Alkylaryl, $C_7$-$C_{30}$-Arylalkyl, die auch Amin- und/oder Carboxylgruppen tragen können, aufweisen können,

und wobei die den Additiven der Formeln (II) und (IV) zugrundeliegenden Polyamidamine (VIII) neben

den Dicarbonsäuren und dem Triamin noch weitere polyamidbildende Bausteine wie Lactame, bevorzugt Caprolactam, und gegebenenfalls auch ganz oder teilweise höhere Polyamine mit bis zu 10 N-Atomen enthalten können,
sowie gegebenenfalls
3) 0,001-300 Gew.-%, bezogen auf die Summe der Gewichte von 1) und 2), an üblichen Zusatzstoffen, bestehen.

Gegenstand der Erfindung ist auch ein Verfahren zur Herstellung der neuen Arylensulfiddpolymermassen sowie ihre Verwendung zur Herstellung von Formkörpern, Folien, Verbundwerkstoffen (Composites), Fasern und anderen Gegenständen.

Die Additive der Formeln (I)-(IV) leiten sich ab von Polyaminen der Formel (VII) (diese können im Gemisch vorliegen, so daß der Mittelwert von m eine ungerade Zahl sein kann)

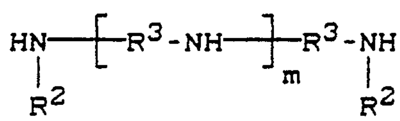
(VII),

und Polyamidaminen der Formel (VIII)

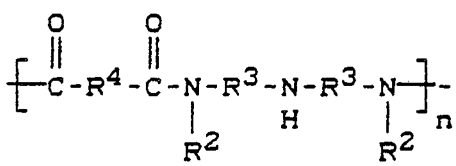
(VIII),

in welchen die Reste $R^2$, $R^3$ und $R^4$, n und m die bereits angegebene Bedeutung haben.

Die Additive können durch Umsetzen der Polyamine (VII) und Polyamidamine (VIII) mit Carbonsäure(derivate)n bzw. Harnstoff-bildenden Verbindungen, bevorzugt Isocyanaten, in Lösung oder in der Schmelze, hergestellt werden.

Sie sind prinzipiell bekannt oder können nach prinzipiell bekannten Verfahren hergestellt werden.

Spezifische Beispiele für Verbindungen der Formel (I)-(IV) sind:

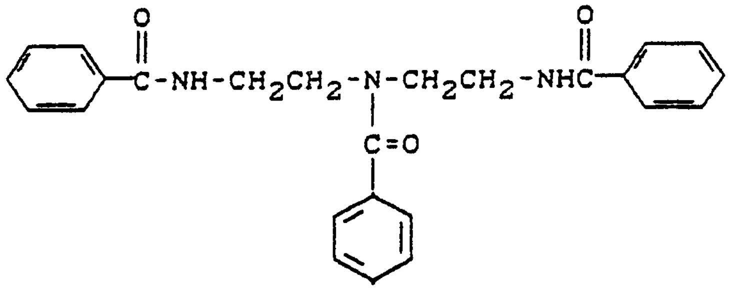
1

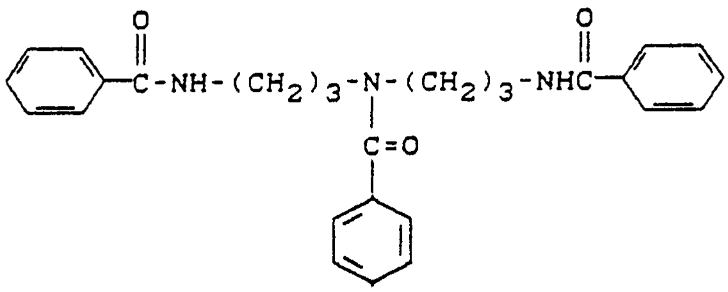
2

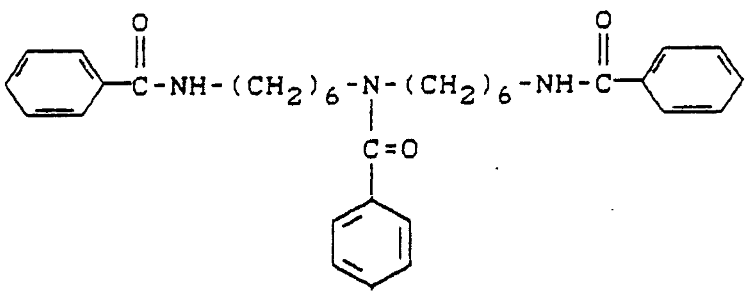
3

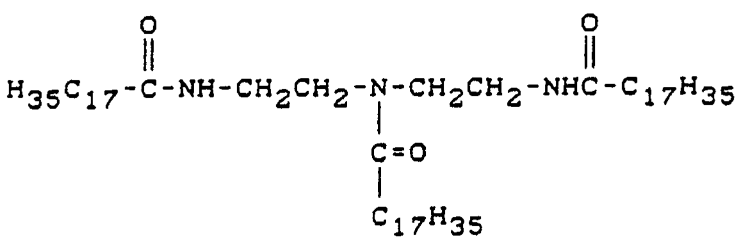
4

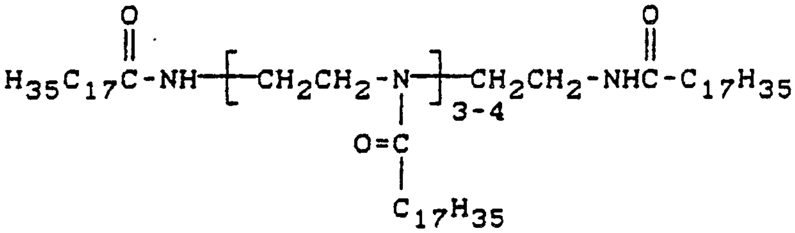

5

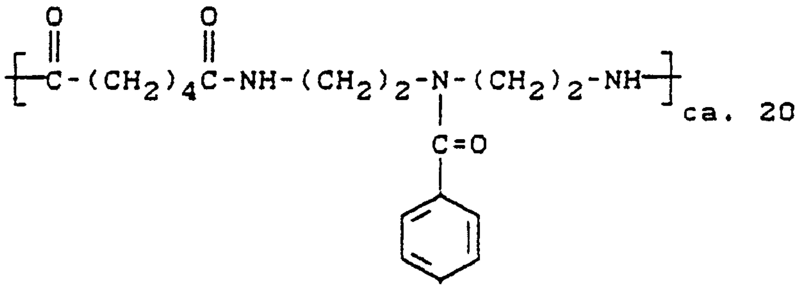

6

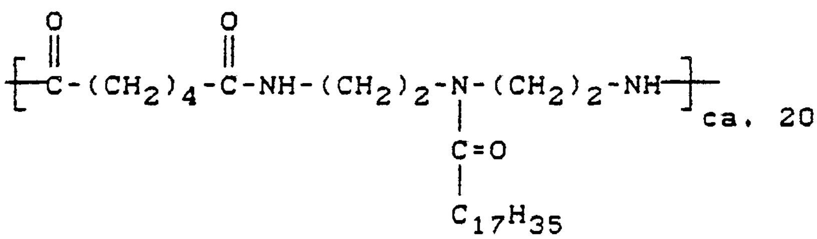

7

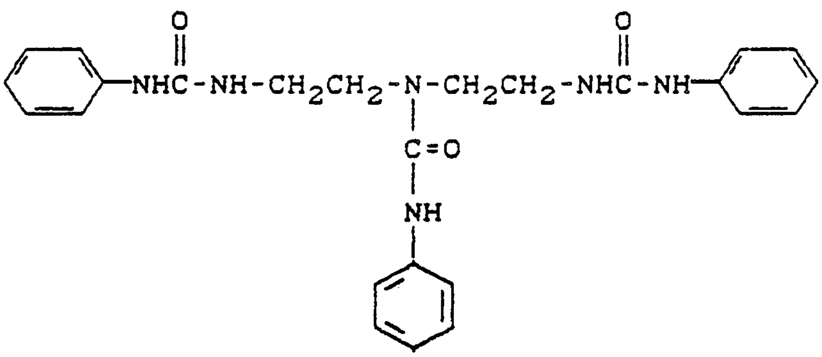

8

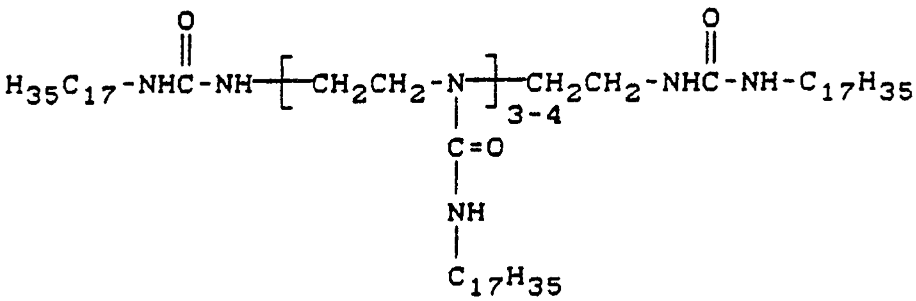

9

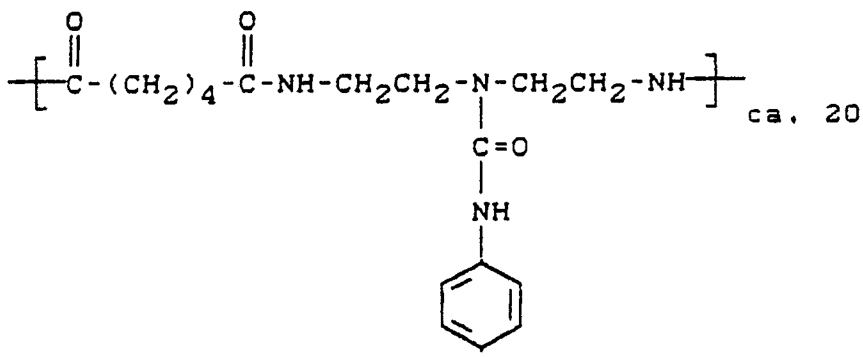

10

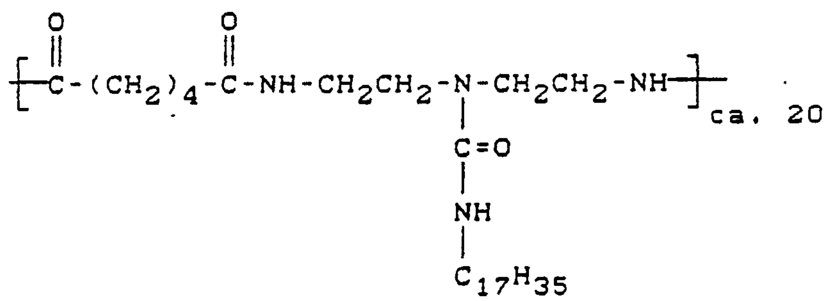

11

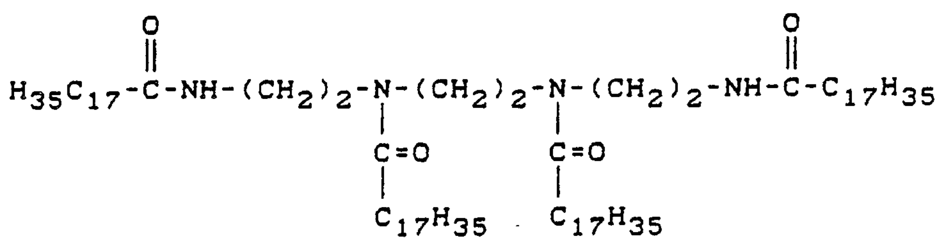

12

Zur Herstellung der Additive der Formeln (I)-(IV) können prinzipiell alle Methoden zur Herstellung von Amiden bzw. Harnstoffen ausgehend von Aminen angewendet werden.

Bevorzugt werden die Additive der Formeln (I) und (II) aus den jeweiligen Polyaminen der Formeln (VII) bzw. (VIII) durch Amidierung mit Carbonsäuren in der Schmelze, gegebenenfalls unter Einsatz üblicher Katalysatoren, hergestellt. Dazu sind Temperaturen von ca. 160° C bis ca. 280° C, je nach Additiv, geeignet. Die Additive der Formeln (I) und (II) können einen Teil der Säuren statt als Amid, auch in Form der Salze enthalten. Es können auch Gemische von Säuren eingesetzt werden.

Geeignet als Säuren, von denen sich die Reste $R_1$ ableiten, sind beispielsweise Benzoesäure, Essigsäure, Propionsäure, Decansäure, Laurinsäure, Hexadecansäure, Stearinsäure und Behensäure. Bevorzugte Reste $R_1$ sind $C_{10-22}$-Alkylreste.

Die Additive der Formeln (I) und (II) können auch durch Umsetzung der Carbonsäuren bzw. geeigneter

Derivate, z.B. der Säurechloride, mit den Verbindungen der Formeln (VII) und (VIII) in Lösung hergestellt werden. Verfahren dafür sind bekannt.

Die Additive der Formeln (I) und (II) können auch noch überschüssige, nicht reagierte, Säure enthalten.

Die Verbindungen der Formel (III) und (IV) werden aus den Aminen der Formeln (VII) und (VIII) durch Reaktion mit Harnstoff bildenden Reagenzien, bevorzugt Isocyanaten, hergestellt. Als Isocyanate sind die den Säuren $R_1$-COOH entsprechenden Isocyanate geeignet. Die Reaktion wird bevorzugt in Lösung durchgeführt. Verfahren hierfür sind bekannt.

Die Polyamidamine der Formel (VIII) können neben der Dicarbonsäure und dem Triamin noch weitere, polyamidbildende Bausteine, bevorzugt Caprolactam, enthalten. Das Triamin kann auch ganz oder teilweise gegen höhere Polyamine ersetzt werden. Bevorzugt sind die Verbindungen der Formel (VIII) aus Adipinsäure und Diethylentriamin aufgebaut und mit einem Überschuß an Adipinsäure geregelt.

Herstellungsbeispiele für die Verbindungen der Formeln (I)-(IV) finden sich im Beispielteil.

Die Additive sind zu 0,05-30 Gew.-% bevorzugt 0,1-20 Gew.-% und besonders bevorzugt 0,5-15 Gew.-% in den erfindungsgemäßen Arylensulfidpolymermassen enthalten.

Die erfindungsgemäß einzusetzenden Verbindungen sind bekannt oder können nach bekannten Verfahren hergestellt werden. Sie beruhen auf preiswerten Rohstoffen und sind preisgünstig herzustellen. Sie können einzeln oder in einem beliebigen Gemisch eingesetzt werden.

Arylensulfidpolymere, vorzugsweise Polyphenylensulfid, sind bekannt (z.B. US-A 3 354 129, EP-A 171 021) und handelsüblich, z.B. TEDUR®.

Die Herstellung der erfindungsgemäßen Arylensulfidpolymerformmassen erfolgt in der Schmelze, bei Temperaturen von 280-350 °C, gegebenenfalls unter Inertgas (z.B. $N_2$). Alle in der Thermoplast-Verarbeitung zur Abmischung üblichen Verfahren wie z.B. Kneten oder Extrudieren sind zur Herstellung der erfindungsgemäßen Arylensulfidpolymeren geeignet.

Zusätzlich zu den Verbindungen der Formeln (I) bis (IV) können die erfindungsgemäßen Arylensulfidpolymermassen als Zusatzstoffe gemäß 3) (bevorzugt 0,005 - 200 Gew.-%) noch beispielsweise Verstärkungsmaterialien (z.B. Glasfasern oder mineralische Füllstoffe), Weichmacher, Fließhilfsmittel, UV-Stabilisatoren, Antioxidantien, Pigmente, Farbstoffe, Entformungsmittel, Antiweichmacher, Nukleierungsmittel, Antinukleierungsmittel, polymere Legierungspartner (bevorzugt Schlagzähmodifikatoren) und andere mehr enthalten.

Es ist bekannt, daß Amide wie z.B. Ethylendiamindistearat in Polymeren als Gleitmittel bzw. Entformungsmittel wirken können. Solche Amide auf Basis von Diaminen zeigen als Kristallisationsverzögerer für Polyarylensulfide eine deutlich geringere Wirkung als die erfindungsgemäß eingesetzten speziellen Amide und/oder Harnstoffe.

Die erfindungsgemäßen Formmassen zeichnen sich durch eine deutlich verringerte Kristallisationsgeschwindigkeit aus. Zusätzlich kann die Schmelzviskosität verringert sein, und weiterhin können das Entformungsverhalten sowie die Oberfläche von Formkörpern verbessert sein.

Sie eignen sich zur Herstellung von Formkörpern, Folien, Fasern und anderen Gegenständen nach z.B. den Verfahren des Spritzgießens und der Extrusion. Gegenstand der Erfindung sind daher auch aus den erfindungsgemäßen Arylensulfidpolymermassen hergestellte Formkörper, Folien, Fasern und andere geformte Körper.

## Beispiele

Die DSC-Messungen wurden mit einem Perkin-Elmer DSC-System 7-Gerät durchgeführt. Als Maß für die Kristallisationsgeschwindigkeit wurde das Maximum der Kristallisationsexothermen beim Abkühlen aus der Schmelze gewählt.

### Beispiel 1

Herstellung von N,N′,N″-Trisstearoyl-diethylentriamin 4

15,5 g Diethylentriamin, 35,6 g Pyridin und 600 ml THF wurden in einem Kolben vorgelegt und auf ca. -20 °C gekühlt. Dann wurden innerhalb von 4 Stunden 136,3 g Stearinsäurechlorid zugetropft, eine halbe Stunde nachgerührt und anschließend weitere 2 Stunden bei Raumtemperatur nachgerührt. Es wurde in 3 l Wasser gefällt, filtriert, mit 4 l Wasser gewaschen und im Vakuum bei 80 °C getrocknet. Es wurden 134 g braune, wachsartige Kristalle vom Schmelzpunkt 105 °C bis 112 °C erhalten. Der Gehalt an Carboxylgruppen betrug 2,3 Gew.-%.

Beispiel 2

Herstellung von N,N'-N''-Trisstearoyl-diethylentriamin 4 durch Schmelzamidierung.

154,5 g Diethylentriamin, 1.280 g Stearinsäure und 0,3 g Triphenylphosphit wurden unter $N_2$ eine Stunde lang bei 180 °C bis 220 °C und anschließend 4,5 Stunden lang bei 260 °C gerührt. Nach Abkühlen wurde aus Toluol umkristallisiert. Die Ausbeute betrug 1.165 g gelbliche Kristalle vom Fließpunkt 103 °C bis 105 °C. Der Gehalt an basischem Stickstoff betrug 0,11 %, der an Carboxylgruppen 0,27 %.

Beispiel 3

Herstellung von N,N',N''-Tribenzoyl-diethylentriamin 1

30,9 g Diethylentriamin, 71,1 g Pyridin und 400 ml THF wurden vorgelegt und auf ca. -15 °C gekühlt. 126,3 g Benzoylchlorid wurden zugetropft, eine halbe Stunde nachgerührt, anschließend 1 Stunde auf 50 °C erhitzt, filtriert, der Filterrückstand mit 1,5 l Wasser aufgeschlämmt, abgesaugt und mit 3 l Wasser gewaschen. Es wurde bei 80 °C im Vakuum getrocknet. Es wurden 82 g gelbliche Kristalle vom Schmelzpunkt 125 °C erhalten.

Beispiel 4

Herstellung von N,N',N''-Tribenzoyl-diethylentriamin 1 durch Schmelzamidierung

150 g Benzoesäure, 30,9 g Diethylentriamin und 0,2 g Triphenylphosphit wurden unter $N_2$ insgesamt 7 Stunden lang auf 180 °C bis 255 °C erhitzt, aus Isopropanol/Toluol 1:1 umkristallisiert, abgesaugt und bei 80 °C getrocknet. Es wurden 62 g weißer Kristalle vom Fließpunkt 126 °C bis 127 °C erhalten. Der Gehalt an basischem Stickstoff betrug 0,043 %, der an Carboxylgruppen 0,17 %.

Beispiel 5

Herstellung eines mit Stearinsäure durchamidierten Polyamins 5 durch Schmelzamidierung.

25 g eines Polyamin-Gemisches, das als Hauptkomponenten Tetraethylenpentamin und Pentaethylenhexamin enthält (Polyamin B, ein Produkt der Bayer AG), 156 g Stearinsäure und 0,1 g Triphenylphosphit wurden in Analogie zu Beispiel 2 bei 180 °C bis 220 °C und 260 °C (5 Stunden) umgesetzt. Nach Umkristallisation aus Toluol wurden 110 g hellbrauner Kristalle vom Schmelzpunkt 90 °C bis 101 °C erhalten. Der Gehalt an basischem Stickstoff betrug 0,56 %, der an Carboxylgruppen 0,27 %.

Beispiel 6

Amid 5

20 g des in Beispiel 5 benutzten Polyamins, 30 g Pyridin und 600 ml THF wurden auf -20 °C gekühlt, 126,6 g Stearinsäurechlorid zugetropft, 1/2 Stunde bei Raumtemperatur nachgerührt und anschließend 1 Stunde bei 50 °C gerührt, in 2 l Wasser gefällt, filtriert, mit 2 l Wasser gewaschen und bei 80 °C getrocknet. Ausbeute: 128,5 g. Das Produkt enthält noch 0,4 % basischen Stickstoff und 5,5 % Carboxylgruppen.

Beispiel 7

Harnstoff 12

37,4 g eines Polyamidamins auf Basis Adipinsäure und Diethylentriamin vom Molekulargewicht ( $\overline{M}_n$) ca. 4.000 wurde unter $N_2$ bei 120° C gerührt, bei dieser Temperatur insgesamt 66,5 g Stearylisocyanat zugetropft und 1 Stunde bei 130° C nachgerührt. Das Reaktionsprodukt war nach Abkühlen ein braunes festes Wachs vom Erweichungspunkt 100° C bis 110° C. Der Amingehalt betrug 0,3 %, der Isocyanat-Gehalt 0 %.

Beispiel 8

Harnstoff 11

37,4 g des in Beispiel 7 benutzten Polyamidamins und 100 ml N-Methylpyrrolidon wurden bei 120° C gerührt und innerhalb von 30 Minuten 23,8 g Phenylisocyanat Zugetropft. Es wurde noch 1 Stunde bei 120° C bis 130° C nachgerührt. Anschließend wurden zu der Hälfte dieser Lösung noch einmal 11,3 g Phenylisocyanat gegeben und 1 Stunde bei 130° C nachgerührt. Der Gehalt an basischem Amin betrug 0,5 %, der Isocyanat-Gehalt 0 %.

Die Beispiele 1 bis 8 sind nicht erfindungsgemäß.

Beispiele 9 bis 14 + Vergleich 1

Polyphenylensulfid (PPS) mit einer Schmelzviskosität von 38 bis 39 Pas bei 320° C und $10s^{-1}$ wurde bei 320° C mit jeweils 1 und 5 Gew.-% der nach den Beispielen 1, 3 und 6 hergestellten Amide unter $N_2$ aufgeschmolzen und jeweils 30 Minuten gerührt, die Kolben abgenommen und das Polymere nach Erkalten gehäckselt.

Die thermischen Daten sind in Tabelle 1 zusammengestellt.

Vergleichsbeispiele 2, 3 und 4

In derselben Weise wurde PPS mit 1 und 5 Gew.-% Ethylendiamindistearat modifiziert. Die DSC-Daten sind mit denen des thermisch gleichgehandelten Ausgangsgranulats in Tabelle 1 enthalten. Man sieht, daß die erfindungsgemäß einzusetzenden Additive bei geringer Einsatzmenge dem Vergleich Ethylendiamindistearat weit überlegen sind in bezug auf die Verringerung der Kristallisationsgeschwindigkeit.

Beispiele 15 bis 20 + Vergleich 5

In der für die Beispiele 9 bis 14 beschriebenen Weise wurde PPS mit jeweils 1, 2 und 5 Gew.-% der nach den Beispielen 7 und 8 hergestellten Harnstoffe modifiziert.

Tabelle 1

| Beispiel | Additiv nach Beispiel | Menge [%] | $T_s$ [°C] | $\Delta H_s$ [J/g] | $T_k$ [°C] | $\Delta H_k$ [J/g] |
|---|---|---|---|---|---|---|
| 9 | 1 | 1 | 280,1 | 39,9 | 215,7 | 44,1 |
| 10 | 1 | 5 | 279,6 | 40,2 | 215,8 | 44,4 |
| 11 | 3 | 1 | 279,1 | 40,1 | 213,3 | 44,2 |
| 12 | 3 | 5 | 278,0 | 40,4 | 209,9 | 43,8 |
| 13 | 6 | 1 | 280,5 | 39,4 | 215,5 | 44,7 |
| 14 | 6 | 5 | 278,2 | 38,7 | 212,4 | 44,2 |
| Vergleich 1 | - | - | 281,4 | 44,5 | 235,1 | 47,3 |
| Vergleich 2 | EBS[1] | 1 | 278,6 | 49,1 | 223,6 | 49,1 |
| Vergleich 3 | EBS[1] | 5 | 279,2 | 46,5 | 213,9 | 47,3 |
| Vergleich 4 | - | - | 279,8 | 50,2 | 231,7 | 49,5 |

[1] EBS = Ethylendiamindistearat

Die DSC-Daten der modifizierten PPS-Typen sind in Tabelle 2 zusammengestellt.

Beispiele 21 bis 23 + Vergleich 6

In der für die Beispiele 9 bis 14 beschriebenen Weise wurde PPS mit einem Amid auf Basis Triethylentetramin, Stearinsäure und Essigsäure (®Persoftal UK, ein Produkt der Bayer AG) modifiziert. Die DSC-Daten sind in Tabelle 2 enthalten.

Tabelle 2

| Beispiel | Additiv nach Beispiel | Menge [%] | $\Delta H_s$ [J/g] | $T_s$ [°C] | $\Delta H_k$ [J/g] | $T_k$ [°C] |
|---|---|---|---|---|---|---|
| 15 | 7 | 1 | 46,7 | 280,0 | 46,5 | 211,3 |
| 16 | 7 | 2 | 48,3 | 280,6 | 47,9 | 212,4 |
| 17 | 7 | 5 | 49,2 | 280,9 | 48,5 | 211,4 |
| 18 | 8 | 1 | 47,5 | 279,2 | 47,9 | 214,5 |
| 19 | 8 | 2 | 46,5 | 279,6 | 46,7 | 211,1 |
| 20 | 8 | 5 | 46,4 | 281,1 | 46,1 | 209,2 |
| Vergleich 5 | - | - | 50,2 | 279,8 | 43,5 | 231,7 |
| 21 | PUK[1] | 1 | 44,1 | 279,0 | 44,7 | 208,2 |
| 22 | PUK[1] | 2 | 44,2 | 278,9 | 44,3 | 205,9 |
| 23 | PUK[1] | 5 | 39,7 | 279,6 | 44,6 | 204,1 |
| Vergleich 6 | - | - | 51,5 | 281,8 | 49,7 | 231,9 |

[1] Persoftal UK

Wie die Beispiele zeigen, sind die erfindungsgemäß einzusetzenden Additive wirksame Kristallisationsverzögerer, wobei schon geringe Mengen ausreichen.

**Ansprüche**

1. Arylensulfidpolymerformmasssen, dadurch gekennzeichnet, daß sie zu
1) 70-99,95 Gew.-% aus an und für sich bekannten Arylensulfidpolymeren, bevorzugt Polyparaphenylensulfid (PPS),
2) 0,05-30 Gew.-% aus Amiden und/oder Harnstoffen der allgemeinen Formeln (I)-(IV),

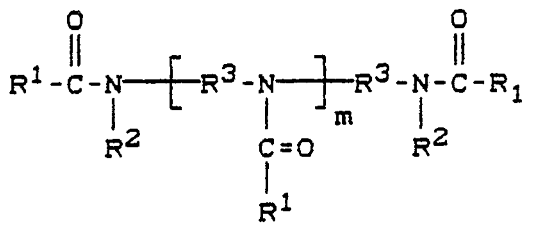

(I),

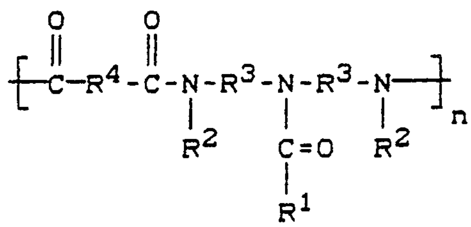

(II),

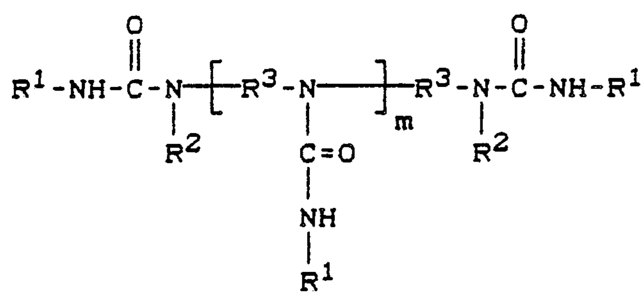

(III),

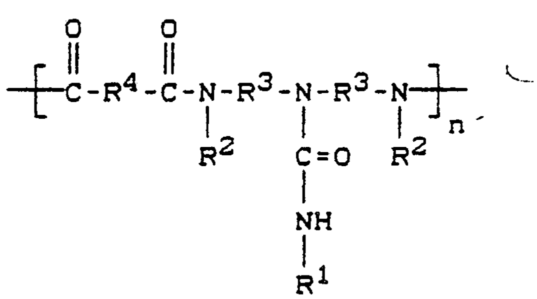

(IV),

wobei

$R^1$ unabhängig voneinander einen Kohlenstoffrest mit 1-40 C-Atomen, bevorzugt 1-23 C-Atomen, der linear und/oder verzweigt, gesättigt oder ungesättigt, offenkettig und/oder cyclisch, aliphatisch und/oder (hetero)-aromatisch mit Heteroatomen wie N, O, S, sein kann,

$R^2$ unabhängig voneinander Wasserstoff, $R_1$ oder Reste der Formeln (V) und (VI),

$R_1-\overset{\overset{O}{||}}{C}-$ (V),

$R_1-NH\overset{\overset{O}{||}}{C}-$ (VI),

bevorzugt Wasserstoff,

$R^3$, $R^4$ unabhängig voneinander einen bivalenten Kohlenstoffrest mit 2-20 Kohlenstoffatomen, der auch Heteroatome wie N, O, S, enthalten kann und linear oder verzweigt, offenkettig oder cyclisch, aliphatisch oder aromatisch ist, bevorzugt aber einen Alkylenrest mit 2-6 C-Atomen,

m eine ganze Zahl von 3-50, bevorzugt 3-20, (der Mittelwert von m kann im Fall von Gemischen auch eine ungerade Zahl sein)

n eine ganze Zahl derart gewählt, daß das mittlere Molekulargewicht ( $\overline{M}_n$)der den Verbindungen der Formeln (II) und (IV) zugrundeliegenden Polyamidamine mindestens 500, bevorzugt mindestens 1000, und nicht mehr als 50000 beträgt,

bedeuten, und wobei die Additive der Formeln (II) und (IV) Endgruppen wie $C_1$-$C_{10}$-Alkyl, $C_6$-$C_{24}$-Aryl, $C_7$-$C_{30}$-Alkylaryl, $C_7$-$C_{30}$-Arylalkyl, die auch Carboxylgruppen und/oder Aminogruppen tragen können, aufweisen können,
und wobei die den Additiven der Formeln (II) und (IV) zugrundeliegenden Polyamidamine (VIII) neben den Dicarbonsäuren und dem Triamin noch weitere polyamidbildende Bausteine wie Lactame, bevorzugt Caprolactam, und gegebenenfalls auch ganz oder teilweise höhere Polyamine mit bis zu 10 N-Atomen enthalten können,
sowie gegebenenfalls
3) aus 0,001-300 Gew.-%, bezogen auf die Summe der Gewichte von 1) und 2), an üblichen Zusatzstoffen, bestehen.

2. Arylensulfidpolymerformmassen nach Anspruch 1, dadurch gekennzeichnet, daß als Zusatzstoffe gemäß 3) beispielsweise Verstärkungsmaterialien (z.B. Glasfasern oder mineralische Füllstoffe), Weichmacher, Fließhilfsmittel, UV-Stabilisatoren, Antioxidantien, Pigmente, Farbstoffe, Entformungsmittel, Antiweichmacher, Nukleierungsmittel, Antinukleierungsmittel, polymere Legierungspartner (bevorzugt Schlagzähmodifikatoren) und andere mehr eingesetzt werden.

3. Arylensulfidpolymerformmassen nach Anspruch 1, dadurch gekennzeichnet, daß als Additive (I)-(IV) bevorzugt die Verbindungen 1-12 eingesetzt werden.

4. Arylensulfidpolymerformmassen nach Anspruch 1, enthaltend 0,1-20 Gew.-% der Verbindungen (I)-(IV).

5. Verfahren zur Herstellung der Arylensulfidpolymerformmassen nach Anspruch 1, dadurch gekennzeichnet, daß die Komponenten in der Schmelze, gegebenenfalls über Konzentrate, gegebenenfalls in mehreren Schritten, miteinander vermischt werden.

6. Verwendung der Arylensulfidpolymerformmasse nach Anspruch 1 zur Herstellung von Formkörpern, Folien, Verbundwerkstoffen (Composites), Fasern und anderen Gegenständen.

7. Formkörper, Folien, Fasern, Verbundwerkstoffe (Composites) und andere Gegenstände aus Formmassen nach Anspruch 1.